(19) Europäisches Patentamt
European Patent Office
Office européen des brevets

(11) EP 4 570 831 A1

(12) EUROPEAN PATENT APPLICATION

(43) Date of publication:
**18.06.2025 Bulletin 2025/25**

(21) Application number: **23216942.5**

(22) Date of filing: **15.12.2023**

(51) International Patent Classification (IPC):
***C08F 210/16*** *(2006.01)* ***C08F 4/659*** *(2006.01)*
***B32B 27/32*** *(2006.01)* ***C08L 23/06*** *(2006.01)*

(52) Cooperative Patent Classification (CPC):
(C-Sets available)
**C08F 210/16; C08L 23/0815;** B32B 27/32;
C08F 4/65912; C08F 4/65916 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **DOU, Qizheng**
**4021 Linz (AT)**
- **BERGER, Friedrich**
**4021 Linz (AT)**
- **AHO, Jani**
**06101 Porvoo (FI)**

(74) Representative: **Maiwald GmbH**
**Elisenhof**
**Elisenstraße 3**
**80335 München (DE)**

# (54) POLYETHYLENE COPOLYMER FOR A FILM LAYER

(57) Metallocene-catalysed multimodal medium density polyethylene (mMDPE), use of the multimodal medium density polyethylene (mMDPE) in film applications and film comprising the mMDPE of the invention.

(52) Cooperative Patent Classification (CPC): (Cont.)

C-Sets
**C08F 10/02, C08F 4/6492;**
**C08F 10/02, C08F 4/65927;**
**C08F 210/16, C08F 2/001;**
**C08L 23/0815, C08L 23/06, C08L 23/06;**
C08F 110/02, C08F 2500/12, C08F 2500/07;
C08F 210/16, C08F 210/14, C08F 2500/12,
C08F 2500/04, C08F 2500/27, C08F 2500/26

## Description

The present invention relates to a metallocene-catalysed multimodal medium density polyethylene (mMDPE), to the use of the multimodal medium density polyethylene (mMDPE) in film applications and to a film comprising the mMDPE of the invention.

State of the art mLLDPE (metallocene catalysed linear low density polyethylene) is widely used everywhere in daily life, like packaging, due to its excellent cost / performance ratios.

Unimodal mLLDPEs are usually used for film application. Unimodal LLDPEs have for instance good optical properties, like low haze, but for instance, the melt processing of such polymers is not satisfactory in production point of view and may cause quality problems of the final product as well. Multimodal mLLDPEs with two or more different polymer components are better to process, but e.g. melt homogenisation of the multimodal PE may be problematic resulting to inhomogeneous final product evidenced e.g. with high gel content of the final product.

Multimodal mLLDPEs are known in the art.

WO 2021009189, WO 2021009190 and WO 2021009191 of Borealis disclose a process for preparing multimodal PE polymers in two loop reactors and one gas phase reactor in the presence of a silica supported metallocene catalyst based on the metallocene complex bis(1-methyl-3-n-butylcyclopentadienyl) zirconium (IV) dichloride.

Film properties, like tensile modulus (TM) and impact strength (dart drop impact, DDI) are not mentioned at all.

Also WO 2021009192 discloses such a process.

Film properties, like tensile modulus (TM) and impact strength (dart drop impact, DDI) are again not mentioned at all.

There is a continuous need to find multimodal PE polymers with different property balances for providing tailored solutions to meet the increasing demands of the end application producers e.g. for reducing the production costs while maintaining or even improving the end product properties. Tailored polymer solutions are also needed to meet the requirements of continuously developing equipment technology in the end application field.

Therefore, there is a need in the art for providing a material that provides good mechanical properties, especially tensile modulus and dart drop (impact strength).

Such multimodal PE polymers should furthermore still have a good sealing performance.

The inventors have now found, that a metallocene catalysed medium density polyethylene (mMDPE) made with a specific metallocene catalyst and having a specific polymer design yields films having improved mechanical properties, especially dart drop (impact strength) and additionally an attractive balance of toughness and stiffness.

## Description of the invention

The present invention is therefore directed to a metallocene catalysed multimodal medium density polyethylene (mMDPE) which consists of

(i) 40.0 to 60.0 wt%, based on the mMDPE, of a polyethylene component (A), and
(ii) 40.0 to 60.0 wt%, based on the mMDPE, of a polyethylene component (B),

whereby the polyethylene polymer component (A) has

a density, measured according to ISO 1183, in the range of from 955 to 975 kg/m$^3$,
a $MFR_2$, determined at 190°C with a load of 2.16 kg according to ISO 1133 in the range of from 100 to 600 g/10 min;

the polyethylene component (B) has

a density, measured according to ISO 1183, in the range of from 900 to 925 kg/m$^3$,
a $MFR_2$, determined at 190°C with a load of 2.16 kg according to ISO 1133, in the range of from 0.00001 to 0.008 g/10 min;

whereby the metallocene catalysed medium density polyethylene (mMDPE) has

a density, measured according to ISO 1183, in the range of from 932 to 955 kg/m$^3$,
a $MFR_2$, determined at 190°C with a load of 2.16 kg according to ISO 1133, in the range of from 0.05 to 0.8 g/10 min and
a ratio of the $MFR_{21}$, determined at 190°C with a load of 21.6 kg according to ISO 1133, to $MFR_2$, determined at 190°C with a load of 2.16 kg according to ISO 1133, $MFR_{21}/MFR_2$, in the range of from 50 to 150 and
a molecular weight distribution MWD (Mw/Mn), determined with GPC, in the range of 10 to 18.

Unexpectedly such a mMDPE provides films with an improved mechanical properties, especially dart drop (impact strength) and additionally an attractive balance of toughness and stiffness.

The invention is therefore further directed to a film comprising at least one layer comprising the above described mMDPE.

## Definitions

Where the term "comprising" is used in the present description and claims, it does not exclude other non-specified elements of major or minor functional importance. For the purposes of the present invention, the term "consisting of' is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed medium density polyethylene (mMDPE) is defined in this invention as medium density polyethylene, which has been produced in the presence of a metallocene catalyst.

Polyethylene polymers made using single site, e.g. metallocene catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

For the purpose of the present invention "medium density polyethylene (MDPE) which comprises polyethylene component (A) and polyethylene component (B)" means that the MDPE is produced in an at least 2-stage sequential polymerization process, wherein first component (A) is produced and component (B) is then produced in the presence of component (A) in a subsequent polymerization step, yielding the MDPE or vice versa, i.e. first component (B) is produced and component (A) is then produced in the presence of component (B) in a subsequent polymerization step, yielding the MDPE.

MDPEs produced in a multistage process are also designated as "in-situ" or "reactor" blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture.

Term "multimodal" in context of medium density polyethylene (MDPE) means herein multimodality with respect to melt flow rate (MFR) of the at least two ethylene polymer components, i.e. the two ethylene polymer components, have different MFR values. The multimodal medium density polyethylene can have in addition or alternatively multimodality between the two polyethylene components with respect to one or more further properties, like density, comonomer type and/or comonomer content, as will be described later below.

The following preferable embodiments, properties and subgroups of multimodal PE and the ethylene polymer components (A) and (B) thereof, as well as for the optional ethylene polymer fractions (A-1) and (A-2) and the film of the invention including the preferable ranges thereof, are independently generalizable so that they can be used in any order or combination to further define the preferable embodiments of the multimodal PE and the article of the invention.

## Detailed Description of Invention

*Ad metallocene catalysed multimodal medium density polyethylene m(MDPE)*

The metallocene catalysed multimodal mMDPE according to the present invention has a density (ISO 1183) in the range of 932 to 955 kg/m$^3$, preferably 935 to 950 kg/m$^3$ and more preferably 938 to 945 kg/m$^3$.

The $MFR_2$ (190°C, 2.16 kg, ISO 1133) of the metallocene catalysed mMDPE is in the range of 0.05 to 0.8 g/10 min, preferably 0.06 to 0.60 g/10 min, more preferably 0.08 to 0.50 g/10 min and even more preferably 0.10 to 0.30 g/10 min.

The $MFR_{21}$ (190°C, 21.6 kg, ISO 1133) of the metallocene catalysed mMDPE is in the range of 5.0 to 50.0 g/10 min, preferably in a range of 8.0 to 40.0 g/10min, more preferably in the range of 10.0 to 30.0 g/10 min and most preferably 12.0 to 20.0 g/10 min.

The metallocene catalysed mMDPE according to the present invention furthermore has a Flow Rate Ratio (FRR) of the $MFR_{21}/MFR_2$ in the range of 50 to 150, preferably of 60.0 to 120.0 and more preferably of 70 to 110.

Additionally, the metallocene catalysed MDPE has a molecular weight distribution (MWD), Mw/Mn, in the range of 10.0 to 18.0, preferably 11.0 to 16.0, and more preferably 11.5 to 15.0.

In an embodiment of the present invention, the ratio of FRR/MWD of the metallocene catalysed mMDPE according to the present invention may be in the range of 5.0 to 12.0, preferably 6.0 to 11.0 and more preferably 7.0 to 10.0.
In addition, the metallocene catalysed mMDPE according to the present invention may have one or more or all of the properties described now below:

*Weight average molecular weight Mw*

The metallocene catalysed mMDPE may have a weight average molecular weight, Mw, of at least 100000 g/mol, preferably in the range of from 110000 to 200000 g/mol, more preferably from 125000 to 180000 g/mol, still more preferably from 135000 to 165000 g/mol.

*z average molecular weight Mz*

The z average molecular weight, Mz, may be in the range of 300000 to 800000 g/mol, preferably 350000 to 650000 g/mol, and more preferably from 400000 to 550000 g/mol.

*Ratio of Mz/Mw*

The ratio of Mz/Mw may be in the range of from 2.0 to 4.5, preferably from 2.2 to 4.0, and more preferably from 2.5 to 3.8.

*Ratio FRR/(Mz/Mw)*

The ratio FRR/(Mz/Mw) may be in the range of from 15.0 to 40.0, preferably from 20.0 to 35.0, and more preferably from 22.0 to 32.0.
The metallocene catalysed mMDPE consists of

(i) 40.0 to 60.0 wt%, relative to the total weight of the mMDPE, of an polyethylene component (A) with a density in the range of 955 to 975 kg/$m^3$ and an $MFR_2$ (190°C, 2.16 kg, ISO 1133) of 100 to 600 g/10 min; and
(ii) 40.0 to 60.0 wt%, relative to the total weight of the mMDPE, of an polyethylene component (B) with a density in the range of 900 to 925 kg/$m^3$ and an $MFR_2$ (190°C, 2.16 kg, ISO 1133) of 0.00001 to 0.008 g/10 min.

The amounts of components (A) and (B) sum up to 100 wt%.
The weight ratio of component (A) to component (B) in the metallocene catalysed mMDPE thus is in the range 40:60 to 60:40, preferably 42:58 to 58:42, and more preferably 45:55 to 55:45.
The polyethylene component (A) and/or (B) can be a homopolymer or an ethylene copolymer. Preferably, the mMDPE can have two copolymer components or one copolymer component and one homopolymer component, thus preferably both components are an ethylene copolymer or alternatively polyethylene component (A) is a homopolymer and polyethylene component (B) is a copolymer or vice versa (component (A) being a copolymer and component (B) being a homopolymer). More preferably, polyethylene component (A) is a homopolymer and polyethylene component (B) is a copolymer.
In view of the present invention by polyethylene homopolymer a polymer is meant, which comprising at least 99.0 wt%, especially at least 99.5 wt% ethylene monomer units. Thus, the polyethylene homopolymer may comprise up to 1.0 wt% comonomer units, but preferably comprises only up to 0.5 wt%, like up to 0.2 wt% or even up to 0.1 wt% only.
In an embodiment of the present invention, the amount of comonomer in the polyethylene homopolymer component is not detectable with $^{13}C$-NMR.
Preferably, component (B) consists of a single ethylene copolymer or of a single ethylene homopolymer, more preferably of a single ethylene copolymer. Component (A) may consist of a single ethylene homo- or copolymer. Alternatively, Component (A) may be an ethylene polymer mixture comprising (e.g. consisting of) a first ethylene polymer fraction (A-1) and a second ethylene polymer fraction (A-2), whereby both fractions are either a homopolymer or a copolymer. Component (A) may be unimodal or multimodal. In case component (A) is an ethylene copolymer mixture, it is preferred if the comonomer(s) in the first and second ethylene copolymer fractions are the same.
Preferred ethylene copolymers employ alpha-olefins (e.g. C3-12 alpha-olefins) as comonomers. Examples of suitable alpha-olefins include 1-butene, 1-hexene and 1-octene. 1-butene and 1-hexene are especially preferred comonomers.
Most preferably, the polyethylene component (A) is a polyethylene homopolymer as defined above and the polyethylene component (B) is an ethylene-1-hexene copolymer.
The polyethylene component (A) preferably has a $MFR_2$ in the range of 150 to 500 g/10min, more preferably 200

to 450 g/10min, even more preferably 250 to 420 g/10min and most preferably 300 to 400 g/10 min.

The density of polyethylene component (A) preferably is in the range of 957 to 974 kg/m$^3$, more preferably 960 to 973 kg/m$^3$ and even more preferably 962 to 972 kg/m$^3$.

In a preferred embodiment polyethylene component (A) consists of two fractions, i.e. a first ethylene polymer fraction (A-1) and a second ethylene polymer fraction (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably, fraction (A-1) is produced first.

The $MFR_2$ and/or the density of fractions (A-1) and (A-2) may be the same or may be different from each other.

Thus, the ethylene polymer fraction (A-1) preferably has a $MFR_2$ (190°C, 2.16 kg, ISO 1133) in the range of 100 to 400 g/10 min, preferably of 150 to 350 g/10 min, more preferably of 180 to 300 g/10 min and even more preferably of 190 to 280 g/10 min, like 200 to 250 g/ 10 min.

The ethylene polymer fraction (A-2) preferably has a $MFR_2$ (190°C, 2.16 kg, ISO 1133) in the range of 100 to 1500 g/10 min, preferably of 200 to 1200 g/10 min, more preferably of 250 to 1000 g/10 min and most preferably of 280 to 800 g/10 min.

Preferably, the $MFR_2$ of fraction (A-2) is the same as the $MFR_2$ of fraction (A-1) or higher than the $MFR_2$ of fraction (A-1).

The density of the ethylene polymer fraction (A-1) preferably is in the range of 945 to 970 kg/m$^3$, more preferably 950 to 968 kg/m$^3$ and even more preferably 955 to 966 kg/m$^3$.

The ethylene polymer fraction (A-2) preferably has a density in the range of 960 to 980 kg/m$^3$, more preferably 965 to 980 kg/m$^3$ and even more preferably 970 to 978 kg/m$^3$.

Preferably, the density of fraction (A-2) is higher than the density of fraction (A-1).

The polyethylene component (B) preferably has a $MFR_2$ in the range of 0.00003 to 0.005 g/10min, more preferably 0.00005 to 0.001 g/10min, and even more preferably 0.00006 to 0.00015 g/10min.

The density of the polyethylene component (B) preferably is in the range of 905 to 920 kg/m$^3$, more preferably 906 to 918 kg/m$^3$ and even more preferably 908 to 916 kg/m$^3$.

The metallocene catalysed mMDPE may be produced by polymerization using conditions which create a multimodal (e.g. bimodal) polymer product using a metallocene catalyst system.

Thus, the metallocene catalysed mMDPE of embodiment (I) can be produced in a 2-stage process, preferably comprising a slurry reactor (loop reactor), whereby the slurry (loop) reactor is connected in series to a gas phase reactor (GPR), whereby either polyethylene component (A) or polyethylene component (B) is produced in the loop reactor and the other ethylene polymer component is then produced in GPR in the presence of the first produced ethylene polymer component to produce the metallocene catalysed mMDPE, preferably the polyethylene component (A) is produced in the loop reactor and the polyethylene component (B) is produced in GPR in the presence of the polyethylene component (A) to produce the metallocene catalysed mMDPE.

In case that the polyethylene component (A) of the metallocene catalysed mMDPE consists of ethylene polymer fractions (A-1) and (A-2), the metallocene catalysed mMDPE can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably, fraction (A-1) is produced first.

The first and the second polymerization stages are preferably slurry polymerization steps. The slurry polymerization usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in each of the first and second polymerization stages is typically from 60 to 100°C, preferably from 70 to 90°C. An excessively high temperature should be avoided to prevent partial dissolution of the polymer into the diluent and the fouling of the reactor. The pressure is from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump.

Loop reactors are generally known in the art and examples are given, for instance, in US-A-4582816, US-A-3405109, US-A-3324093, EP-A-479186 and US-A-5391654. It is thus preferred to conduct the first and second polymerization stages as slurry polymerizations in two consecutive loop reactors.

The slurry may be withdrawn from each reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from each of the first and second polymerization stages continuously.

Hydrogen is typically introduced into the first and second polymerization stages for controlling the $MFR_2$ of the first and second ethylene polymers. The amount of hydrogen needed to reach the desired MFR depends on the catalyst used and the polymerization conditions.

The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

The third polymerization stage is a gas phase polymerization step, i.e. carried out in a gasphase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

A chain transfer agent (e.g. hydrogen) is typically added to the third polymerization stage.

Such a process is described inter alia in WO 2016/198273, WO 2021009189, WO 2021009190, WO 2021009191 and WO 2021009192. Full details of how to prepare suitable multimodal polymers can be found in these references.

A suitable process is the Borstar PE process or the Borstar PE 3G process.

The metallocene catalysed mMDPE according to the present invention is therefore preferably produced in a loop loop gas cascade. Such polymerization steps may be preceded by a prepolymerization step.

The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry. Thus, the prepolymerization step may be conducted in a loop reactor.

The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 45 to 75°C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount, which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1.0 to 5.0 wt% in respect to the final metallocene catalysed mMDPE. This can counted as part of the first

polyethylene component (A).

*Catalyst*

The metallocene catalysed mMDPE of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

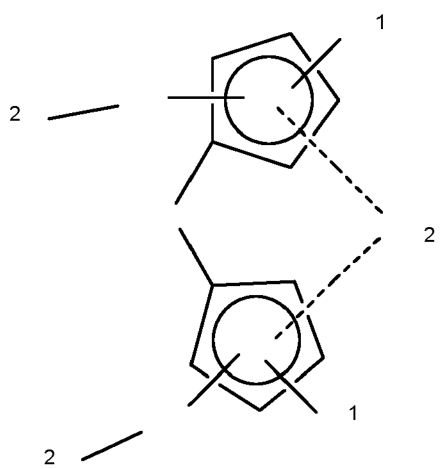

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each R' is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -$Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

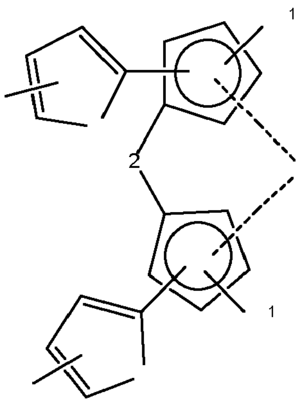

(I´)

wherein each X is independently a halogen atom, a $C_{1-6}$-alkyl group, $C_{1-6}$-alkoxy group, phenyl or benzyl group;
L is a $Me_2Si$-;
each R' is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

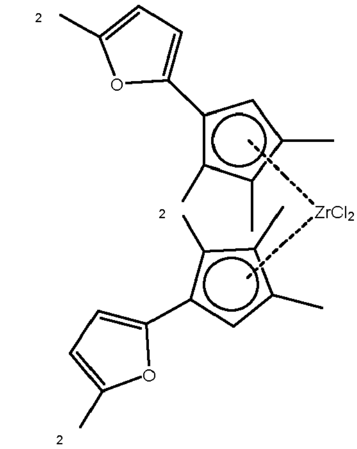

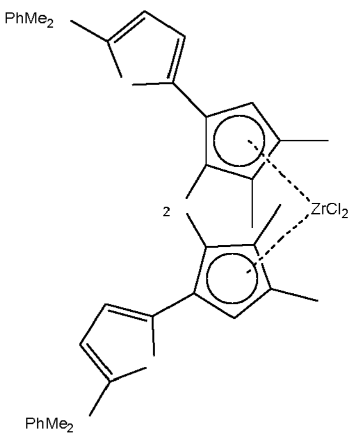

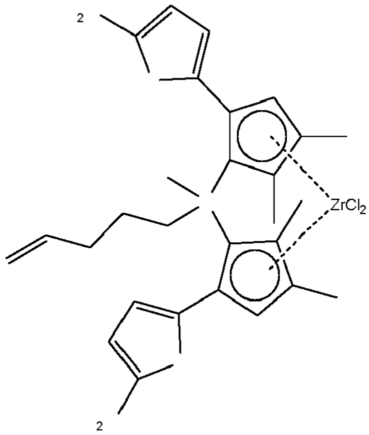

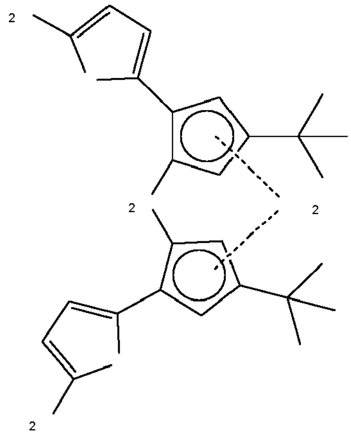

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the metallocene catalysed mMDPE are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

The metallocene catalysed mMDPE may contain additives and/or fillers.

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

As mentioned above, the metallocene catalysed mMDPE according to the present invention provides improved mechanical properties, especially tensile modulus and dart drop (impact strength) and additionally an attractive balance of mechanical and sealing properties.

The invention is therefore further directed to a film comprising at least one layer comprising the above described metallocene catalysed mMDPE.

**Film**

The film of the invention comprises at least one layer comprising the above defined metallocene catalysed mMDPE. The film can be a monolayer film comprising the above defined polyethylene composition or a multilayer film, wherein at least one layer comprises the above defined polyethylene composition. The terms "monolayer film" and multilayer film" have well known meanings in the art.

The layer of the monolayer or multilayer film of the invention may consist of the metallocene catalysed mMDPE as such or of a blend of the metallocene catalysed mMDPE together with further polymer(s). In case of blends, any further polymer is different from the metallocene catalysed mMDPE and is preferably a polyolefin. Part of the above mentioned additives can optionally added to the metallocene catalysed mMDPE during the film preparation process. Preferably, the at least one layer of the invention comprises at least 90 wt%, more preferably at least 95 wt%, and even more preferably at least 98 wt%, yet more preferably at least 80 wt%, of the metallocene catalysed mMDPE of the present invention. Most preferably said at least one layer of the film of invention consists of the metallocene catalysed mMDPE.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

Preferred films according to the invention are monolayer blown films.

The monolayer film of the invention may have a thickness of 20 to 120 μm, preferably 30 to 100 μm and more preferably 35 to 80 μm.

The films according to the present invention have at least property a) and one or both of the below described properties b) and c):

a) The films of the invention may have a dart-drop impact strength (DDI) determined according to ISO 7765-1:1988 on a 40 μm monolayer test blown film of at least 300 g up to 800 g , preferably 400 g up to 700 g and more preferably 450 g up to 600 g.

b) Films according to the present invention may have good stiffness (tensile modulus measured on a 40 μm monolayer test blown film according to ISO 527-3), i.e. > 250 MPa (in both directions).

Thus, the films comprising the polyethylene composition have a tensile modulus (measured on a 40 μm monolayer test blown film according to ISO 527-3) in machine (MD) direction in the range of > 250 MPa to 800 MPa, preferably of 300 MPa to 500 MPa and in transverse (TD) direction in the range of 400 MPa to 1000 MPa, preferably of 500 MPa to 800 MPa and/or

c) The films may be characterized by an improved relation between mechanical properties and sealing properties according to formula (I):

$$\frac{Tensile\ Modulus\ (MD)[MPa] * DDI(g)}{SIT\ [°C]} > 1000$$

determined on 40 μm test blown film, wherein the Tensile Modulus in machine direction is measured according to ISO 527-3 at 23°C on 40 μm test blown films, DDI is the dart-drop impact strength determined according to ISO 7765-1:1988 on a 40 μm test blown film and SIT is the sealing initiation temperature measured as described in the experimental part on a 40 μm test blown film.

Preferably TM(MD)*DDI/SIT is > 1200, and more preferably > 1500.

A suitable upper limit for TM(MD)*DDI/SIT is 3000, preferably 2500, and more preferably 2300.

Preferably, films according to the present invention fulfil parameter a) and additionally at least parameter c) more preferably parameter a) and additionally parameter b) and c)

The films according to the present invention are highly useful for being used in various packaging applications.

Furthermore the films according to the present invention may be used as a layer in multilayer polyethylene based blown film, preferably as core layer in multilayer polyethylene based blown films.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

Melt Flow Rate

The melt flow rate (MFR) was determined according to ISO 1133 and is indicated in g/10 min. The MFR is an indication of the flowability, and hence the processability, of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$logA = x \cdot logB + (1 - x) \cdot logC$$

$$C = 10^\wedge \frac{(logA - x.logB)}{(1 - x)}$$

*For Component B:*

B = $MFR_2$ of Component (A)
C = $MFR_2$ of Component (B)
A = final $MFR_2$ (mixture) of multimodal mMDPE
X = weight fraction of Component (A).

*For Fraction (A-2):*

B = $MFR_2$ of 1st fraction (A-1)
C = $MFR_2$ of 2nd fraction (A-2)
A = final $MFR_2$ (mixture) of loop polymer (= Component (A))
X = weight fraction of the 1st fraction (A-1).

**Density**

Density of the polymer was measured according to ISO 1183 and ISO1872-2 for sample preparation and is given in kg/m$^3$.

**GPC**

Molecular weight averages (Mz, Mw and Mn), Molecular weight distribution (MWD) and its broadness, described

by polydispersity index, PDI= Mw/Mn (wherein Mn is the number average molecular weight and Mw is the weight average molecular weight) were determined by Gel Permeation Chromatography (GPC) using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i x\, M_i)}{\sum_{i=1}^{N} A_i} \quad (2)$$

$$M_z = \frac{\sum_{i=1}^{N}(A_i\, x\, M_i^2)}{\sum_{i=1}^{N}(A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$K_{PS} = 19 \times 10^{-3}$ mL/g, $\alpha_{PS} = 0.655$

$K_{PE} = 39 \times 10^{-3}$ mL/g, $\alpha_{PE} = 0.725$

$K_{PP} = 19 \times 10^{-3}$ mL/g, $\alpha_{PP} = 0.725$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

To exclude the influence of additives like irganox 1010, irgafos 168 or some other low molecular weight oligomers, the low molecular weight integration limit was set in the valley between the antioxidant peak and the polymer peak (~ logM of 2.8 (PE equivalent) for the analysed samples).

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for

the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the *B2 sites at 39.8 ppm accounting for the number of reporting sites per comonomer:

$$B = I_{*B2}$$

If present the amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the ββB2B2 site at 24.6 ppm accounting for the number of reporting sites per comonomer:

$$BEB = 2 * I\beta\beta B2B2$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

Sequences of BBB were not observed. The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = Htotal / (Etotal + Btotal + Htotal)$$

The amount isolated 1-hexene incorporated in EEHEE sequences was quantified using the integral of the *B4 sites at 38.3 ppm accounting for the number of reporting sites per comonomer:

$$H = I_{*B4}$$

If present the amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

If present the amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239.
Griffin, J.M., Tripon, C., Samoson, A., Filip, C., and Brown, S.P., Mag. Res. in Chem. 2007 45, S1, S198.
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.
Busico, V., Cipullo, R., Monaco, G., Vacatello, M., Segre, A.L., Macromoleucles 30 (1997) 6251.
Zhou, Z., Kuemmerle, R., Qiu, X., Redwine, D., Cong, R., Taha, A., Baugh, D. Winniford, B., J. Mag. Reson. 187 (2007) 225.
Busico, V., Carbonniere, P., Cipullo, R., Pellecchia, R., Severn, J., Talarico, G., Macromol. Rapid Commun. 2007, 28, 1128.
Resconi, L., Cavallo, L., Fait, A., Piemontesi, F., Chem. Rev. 2000, 100, 1253.

**Dart drop strength (DDI): Impact resistance by free-falling dart method**

The DDI was measured according to ISO 7765-1:1988 / Method A from the films (non-oriented films and laminates) as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

Standard conditions:

Conditioning time: > 96 h at 50 ±2°C ±10 %rh
Test temperature: 23°C
Dart head material: phenolic
Dart diameter: 38 mm
Drop height: 660 mm

Results:

Impact failure weight - 50% [g]

**Tensile modulus**

The tensile test was conducted according to ISO 527-3, moreover the modulus of elasticity (secant modulus between 0.05 % and 0.25 % elongation) is also determined. Type 2 (parallelsided specimens) specimens were used.
During testing a specimen is extended along its major axis for determination of tensile properties at constant testspeed (speed of crosshead) until the specimen fracture. During this procedure the load sustained by the specimen and the elongation, which is measured by the crosshead, are measured.

Standard conditions:

Conditioning time: > 96 h at 50 ±2°C ±10 %rh
Test temperature: 23°C
Gripping distance: 100 mm
Gauge length: 100 mm
Secant modulus: 0.05 % - 0.25 %
Testspeed modulus: 1 mm/min
Testspeed: 200 mm/min

**Sealing initiation temperature (SIT); sealing end temperature (SET), sealing range**

The method determines the sealing temperature range (sealing range) of polyethylene films, in particular blown films or cast films. The sealing temperature range is the temperature range, in which the films can be sealed according to conditions given below.
The lower limit (heat sealing initiation temperature (SIT)) is the sealing temperature at which a sealing strength of 5 N is achieved. The upper limit (sealing end temperature (SET)) is reached, when the films stick to the sealing device.
The measurement was done according to the slightly modified ASTM F1921 - 12, where the test parameters sealing pressure, sealing time, delay time and clamp separation rate have been modified. The determination of the force/temperature curve was continued until thermal failure of the film. The sealing range was determined on a J&B Universal Sealing Machine Type 4000 with a monolayer test blown film of 40 μm thickness with the following further parameters:

Conditioning time: > 96 h
Specimen width: 25 mm

Sealing pressure: 0.4 N/mm2 (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°CGrip separation rate: 42 mm/sec

**Film sample preparation**

The film samples have been produced on a small-scale laboratory blown film line from company COLLIN Lab & Pilot Solutions GmbH.

The line consists of an extruder with a Ø 25 mm screw with an LID ration of 30. The extruder temperature has been set at 200°C, the melt temperature was 202 - 204°C and has been recorded after 45 min of process stabilization. The extruder is followed by a blow head which is equipped with a Ø 50 mm annular die with a die gap of 1.5 mm. The line has been run at a constant throughput of 6,49 kg/h and a line speed of 7,4 m/min. The blow up ratio (BUR) of the film bubble was 2.5:1 resulting in a laid flat width of the film of 196 mm. The film was produced with a thickness of 40 μm.

The films produced were used for the following mechanical testing.

**Examples:**

**Cat.Example: Catalyst preparation for CAT1 for Inventive Examples IE1 and comparative Examples CE1 and CE2:**

*Loading* of *SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring with 95 rpm. Stirring speed was increased from 95 rpm -> 200 rpm after toluene addition, stirring time was 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Polymerization:**

Borstar pilot plant with a 3-reactor set-up (loop1 - loop2 - GPR 1) and a prepolymerization loop reactor.

**Table 1:** Polymerization conditions for mMDPE-1, mMDPE-2 and mMDPE-3

| | mMDPE-1 (CE1) | mMDPE-2 (CE2) | mMDPE-3 (IE1) |
|---|---|---|---|
| **Catalyst** | CAT1 | CAT1 | CAT1 |
| **Prepoly reactor** | | | |
| Temp. (°C) | 50 | 50 | 50 |
| Press. (kPa) | 5747 | 5760 | 5358 |
| C2 (kg/h) | 4.0 | 4.0 | 4.0 |
| H2(g/h) | 0.04 | 0.04 | 0.04 |
| C4 (g/h) | 86.3 | 88.3 | 107.5 |
| Split (wt%) | 3.5 | 3.5 | 4.2 |
| **loop 1 Fraction (A-1)** | | | |
| Temp. (°C) | 85 | 85 | 85 |
| Press. (kPa) | 5550 | 5549 | 5362 |
| C2 conc. (mol%) | 5.4 | 5.3 | 5.4 |
| H2/C2 ratio (mol/kmol) | 0.78 | 0.80 | 0.92 |
| C4/C2 ratio (mol/kmol) | 3.8 | 3.9 | 6.9 |
| Split (wt%) | 21.5 | 21.8 | 18.4 |
| Density (kg/m3) of loop 1 material (fraction (A-1) | 960.0 | 959.7 | 965.1 |
| MFR2 (g/10 min) of loop 1 material (fraction (A-1) | 30.0 | 24.2 | 208 |
| **loop 2** | | | |
| Temp. (°C) | 85 | 85 | 85 |
| Press. (kPa) | 5356 | 5352 | 5217 |
| C2 conc. (mol%) | 5.3 | 5.4 | 5.6 |
| H2/C2 ratio (mol/kmol) | 0.87 | 0.82 | 0.84 |
| C4/C2 ratio (mol/kmol) | 2.0 | 2.0 | 6.9 |
| Split (wt%) | 23.9 | 24.2 | 27.0 |
| Density (kg/m3) after loop 2 (component (A)) | 968.0 | 968.0 | 970.3 |
| MFR2 (g/10 min) after loop 2 (component (A)) | 138.0 | 83 | 336 |
| MFR2 (g/10 min) of loop 2 material (fraction (A-2)) | 676 | 303.7 | 540 |
| Density (kg/m3) of loop 2 material (fraction (A-2)) | 976 | 976.7 | 975.5 |
| | | | |
| **GPR** | | | |
| Temp. (°C) | 80 | 80 | 80 |
| Press. (kPa) | 2000 | 2000 | 2000 |
| H2/C2 ratio (mol/kmol) | 0.49 | 0.36 | 0.26 |
| C6/C2 ratio (mol/kmol) | 4.61 | 4.44 | 4.47 |
| Split (wt%) | 51.1 | 50.5 | 50.3 |
| MFR2 (g/10 min) of GPR material (Component (B)) | 0.003 | 0.001 | 0.00008 |
| Density (kg/m3) of GPR material (Component (B)) | 913.9 | 914.3 | 910.7 |

The polymers were mixed with 0.027 wt% FX 5922 (3M Dynamar Polymer Processing Additive) and 0.24 wt% Irganox B 561 (BASF), where wt% are relative to total weight of composition (the sum of mMDPE powder + additive =

100%) compounded and extruded on a NT extruder. The melt temperature was 235°C, production rate was 300 kg/h.

**Table 2:** Material properties of mMDPE-1, mMDPE-2 andmMDPE-3

| **Material** | **mMDPE-1 CE1** | **mMDPE-2 CE2** | **mMDPE-3 IE1** |
|---|---|---|---|
| $MFR_2$ (g/10 min) (final pellets) | 0.60 | 0.28 | 0.16 |
| $MFR_2$, (g/10 min) | 31.6 | 18.0 | 15.34 |
| $MFR_{21}/MFR_2$ (FRR) | 52.6 | 64.3 | 95.9 |
| Density (kg/m$^3$) | 940.4 | 940.9 | 940.3 |
| Mz (g/mol) | 318500 | 384500 | 497500 |
| Mw (g/mol) | 110000 | 130000 | 152000 |
| Mn (g/mol) | 17400 | 17850 | 11800 |
| Mz/Mw | 2.9 | 3.0 | 3.3 |
| Mw/Mn (MWD) | 6.3 | 7.3 | 12.9 |
| FRR/(Mz/Mw) | 18.1 | 21.4 | 29.3 |
| FRR/MWD | 8.3 | 8.8 | 7.4 |
| C4 (mol%)* | 0 | 0 | 0 |
| C6 (mol%) | 0.86 | 0.75 | 1.0 |
| C6 in GPR (mol%) | 1.7 | 1.5 | 2.0 |
| ***below the detection limit** | | | |

**Monolayer blown films**

**Table 3: Properties of blown films**

| | | **CE1** | **CE2** | **IE1** |
|---|---|---|---|---|
| TM/MD | MPa | 534 | 553 | 391 |
| TM/TD | MPa | 644 | 679 | 599 |
| DDI | g | 263 | 274 | 555 |
| SIT | | 123 | 123 | 123 |
| TM(MD)*DDI/SIT | | 1142 | 1232 | 1764 |

As can be seen from the above Table the composition using the metallocene catalysed mMDPEs according to the present invention has improved impact properties and show the best balance between stiffness, impact and sealing properties. The metallocene catalysed mMDPEs according to the present invention differs from the comparative mMDPEs in the polymer design, especially in different, i.e. higher, loop MFRs. Due to this specific design, especially DDI is improved at comparable tensile modulus and sealing properties (i.e. SIT), thus leading to the improved balance between stiffness, impact and sealing properties.

**Claims**

**1.** A metallocene catalysed multimodal medium density polyethylene (mMDPE), which consists of

(i) 40.0 to 60.0 wt%, based on the mMDPE, of a polyethylene component (A), and
(ii) 40.0 to 60.0 wt%, based on the mMDPE, of a polyethylene component (B),
whereby the polyethylene polymer component (A) has

a density, measured according to ISO 1183, in the range of from 955 to 975 kg/m$^3$,
a $MFR_2$, determined at 190°C with a load of 2.16 kg according to ISO 1133 in the range of from 100 to 600 g/10 min;

the polyethylene component (B) has

a density, measured according to ISO 1183, in the range of from 900 to 925 kg/m$^3$,
a $MFR_2$, determined at 190°C with a load of 2.16 kg according to ISO 1133, in the range of from 0.00001 to 0.008 g/10 min;

whereby the metallocene catalysed medium density polyethylene (mMDPE) has

a density, measured according to ISO 1183, in the range of from 932 to 955 kg/m$^3$,
a $MFR_2$, determined at 190°C with a load of 2.16 kg according to ISO 1133, in the range of from 0.05 to 0.8 g/10 min and
a ratio of the $MFR_{21}$, determined at 190°C with a load of 21.6 kg according to ISO 1133, to $MFR_2$, determined at 190°C with a load of 2.16 kg according to ISO 1133, $MFR_{21}/MFR_2$, in the range of from 50 to 150 and a molecular weight distribution MWD (Mw/Mn), determined with GPC, in the range of 10 to 18.

**2.** The metallocene catalysed multimodal medium density polyethylene (mMDPE), according to claim 1, wherein the metallocene catalysed mMDPE has one or more, preferably all of the properties below,

a density, measured according to ISO 1183, in the range of 935 to 950 kg/m$^3$, preferably 938 to 945 kg/m$^3$,
a $MFR_2$, determined at 190°C with a load of 2.16 kg according to ISO 1133, in the range of 0.06 to 0.60 g/10 min, more preferably 0.08 to 0.50 g/10 min and even more preferably 0.10 to 0.30 g/10 min,
a $MFR_{21}$, determined at 190°C with a load of 2.16 kg according to ISO 1133, in the range of 8.0 to 40.0 g/10 min, preferably in a range of 10.0 to 30.0 g/10min, more preferably in the range of 12.0 to 20.0 g/10 min,
a Flow Rate Ratio (FRR), $MFR_{21}/MFR_2$ in the range of 60.0 to 120.0, preferably of 70.0 to 110.0.

**3.** The metallocene catalysed multimodal medium density polyethylene (mMDPE) according to claim 1 or 2, wherein the metallocene catalysed mMDPE has

a molecular weight distribution (MWD), Mw/Mn, in the range of 11.0 to 16.0, preferably 11.5 to 15.0, and/or
a ratio of FRR/MWD in the range of 5.0 to 12.0, preferably 6.0 to 11.0 and more preferably 7.0 to 10.0.

**4.** The metallocene catalysed multimodal medium density polyethylene (mMDPE) according to any of the preceding claims 1 to 3, wherein the metallocene catalysed mMDPE has in addition one or more or preferably all of the following properties:

a weight average molecular weight, Mw, of at least 100000 g/mol, preferably in the range of 110000 to 200000 g/mol, more preferably 125000 to 180000 g/mol, still more preferably 135000 to 165000 g/mol,
a z average molecular weight, Mz, in the range of 300000 to 800000 g/mol, preferably 350000 to 650000 g/mol, and more preferably from 400000 to 550000 g/mol,
a ratio of Mz/Mw in the range of from 2.0 to 4.5, preferably from 2.2 to 4.0, and more preferably from 2.5 to 3.8,
a ratio FRR/(Mz/Mw) in the range of 15.0 to 40.0, preferably from 20.0 to 35.0, and more preferably from 22.0 to 32.0;
Mw, Mz both determined with GPC.

**5.** The metallocene catalysed multimodal medium density polyethylene (mMDPE) according to any of the preceding claims 1 to 4, wherein in the metallocene catalysed mMDPE,

the polyethylene component (A) has a density, measured according to ISO 1183 in the range in the range of 957 to 974 kg/m$^3$, preferably 960 to 973 kg/m$^3$ and more preferably 962 to 972 kg/m$^3$ and a $MFR_2$, determined at 190°C with a load of 2.16 kg according to ISO 1133, in the range of 150 to 500 g/10min, preferably 200 to 450 g/10min, and more preferably 250 to 420 g/10min, and
the polyethylene component (B) has a density, measured according to ISO 1183, in the range of 905 to 920 kg/m$^3$, more preferably 906 to 918 kg/m$^3$ and even more preferably 908 to 916 kg/m$^3$ and an $MFR_2$, determined at 190°C with a load of 2.16 kg according to ISO 1133, in the range of 0.00003 to 0.005 g/10min, more preferably 0.00005 to

0.001 g/10min, and even more preferably 0.00006 to 0.00015 g/10min.

**6.** The metallocene catalysed multimodal medium density polyethylene (mMDPE) according to any of the preceding claims 1 to 5, wherein in the metallocene catalysed mMDPE, polyethylene component (A) and/or (B) can be a homopolymer or an ethylene copolymer, preferably, both components are an ethylene copolymer or alternatively polyethylene component (A) is a homopolymer and polyethylene component (B) is a copolymer or vice versa, component (A) being a copolymer and component (B) being a homopolymer, more preferably, polyethylene component (A) is a homopolymer and polyethylene component (B) is a copolymer and most preferably polyethylene component (A) is a polyethylene homopolymer and polyethylene component (B) is an ethylene-1-hexene copolymer.

**7.** The metallocene catalysed multimodal medium density polyethylene (mMDPE) according to any of the preceding claims 1 to 6, wherein in the metallocene catalysed mMDPE, component (B) consists of a single ethylene copolymer or of a single ethylene homopolymer, more preferably a single ethylene copolymer and component (A) consist of a single ethylene homo- or copolymer or alternatively, component (A) may be an ethylene homo- or copolymer mixture comprising a first ethylene polymer fraction (A-1) and a second ethylene polymer fraction (A-2), whereby both fractions are either a homopolymer or a copolymer.

**8.** The metallocene catalysed multimodal medium density polyethylene (mMDPE) according to claim 7, wherein the polyethylene component (A) is a polyethylene homopolymer mixture comprising, preferably consisting of a first ethylene homopolymer fraction (A-1) and a second ethylene homopolymer fraction (A-2),

whereby the ethylene polymer fraction (A-1) has
a $MFR_2$, determined at 190°C with a load of 2.16 kg according to ISO 1133, in the range of 100 to 400 g/10 min, preferably of 150 to 350 g/10 min, more preferably of 180 to 300 g/10 min and even more preferably of 190 to 280 g/10 min, and
a density, measured according to ISO 1183, in the range of 945 to 970 kg/$m^3$, more preferably 950 to 968 kg/$m^3$ and even more preferably 955 to 966 kg/$m^3$ and
the ethylene polymer fraction (A-2) has a $MFR_2$, determined at 190°C with a load of 2.16 kg according to ISO 1133, in the range of 100 to 1500 g/10 min, preferably of 200 to 1200 g/10 min, more preferably of 250 to 1000 g/10 min and most preferably of 280 to 800 g/10 min, and
a density in the range of 960 to 980 kg/$m^3$, more preferably 965 to 980 kg/$m^3$ and even more preferably 970 to 978 kg/$m^3$.

**9.** The metallocene catalysed multimodal medium density polyethylene (mMDPE) according to any of the preceding claims, wherein the metallocene catalysed multimodal medium density polyethylene (mMDPE) is produced in the presence of metallocene complex of formula (I):

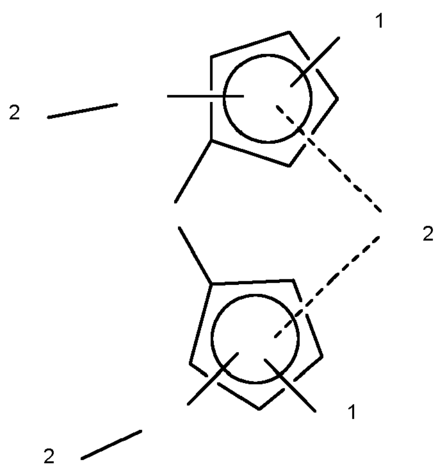

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to

10 carbon atoms;
M is Ti, Zr or Hf;
each R' is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

**10.** A film comprising the metallocene catalysed multimodal medium density polyethylene (mMDPE) according to any of the preceding claims 1 to 9.

**11.** The film according to claim 10, wherein the film comprises at least one layer comprising the metallocene catalysed multimodal medium density polyethylene (mMDPE), whereby the at least one layer comprises at least 90 wt%, more preferably at least 95 wt%, even more preferably at least 98 wt% of the metallocene catalysed multimodal medium density polyethylene (mMDPE) or most preferably consists of the metallocene catalysed multimodal medium density polyethylene (mMDPE) according to any of the preceding claims 1 to 9.

**12.** The film according to claim 9 or 10, wherein the film has at least property a) and one or both, preferably both of the below described properties b) and c):

a) a dart-drop impact strength (DDI) determined according to ISO 7765-1:1988 on a 40 μm monolayer test blown film of at least 300 g up to 800 g , preferably 400 g up to 700 g and more preferably 450 g up to 600 g,
b) a tensile modulus, measured on a 40 μm monolayer test blown film according to ISO 527-3, in machine (MD) direction in the range of > 250 MPa to 800 MPa, preferably of 300 MPa to 500 MPa and in transverse (TD) direction in the range of 400 MPa to 1000 MPa, preferably of 500 MPa to 800 MPa,
c) an improved relation between mechanical properties and sealing properties according to formula (I):

$$\frac{Tensile\ Modulus\ (MD)[MPa] * DDI(g)}{SIT\ [°C]} > 1000$$

determined on 40 μm test blown film, wherein the Tensile Modulus in machine direction is measured according to ISO 527-3 at 23°C on 40 μm test blown films , DDI is the dart-drop impact strength determined according to ISO 7765-1:1988 on a 40 μm test blown film and SIT is the sealing initiation temperature measured as described in the experimental part on a 40 μm test blown film,
preferably TM(MD)*DDI/SIT is > 1200, and more preferably > 1500 and up to 3000, preferably up to 2500, more preferably up to 2300.

**13.** Use of a film according to any of the preceding claims 10 to 12 in packaging applications or as a layer in multilayer polyethylene based blown film, preferably as core layer in multilayer polyethylene based blown films.

Europäisches Patentamt
European Patent Office
Office européen des brevets

# EUROPEAN SEARCH REPORT

Application Number
EP 23 21 6942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 116 359 A1 (BOREALIS AG [AT]) 11 January 2023 (2023-01-11) * tables 3, 4; compounds znLLDPE-2 * ----- | 1-10,12, 13 | INV. C08F210/16 C08F4/659 B32B27/32 C08L23/06 |
| X | EP 3 009 457 A1 (ABU DHABI POLYMERS CO LTD BOROUGE LLC [AE]; BOREALIS AG [AT]) 20 April 2016 (2016-04-20) * claims 1, 2, 5; example CE1; table 1 * ----- | 1-7,9-13 | |
| X | WO 2023/217750 A1 (BOREALIS AG [AT]) 16 November 2023 (2023-11-16) * claims 1-15; example all; tables 1-2 * ----- | 1-13 | |

TECHNICAL FIELDS SEARCHED (IPC)

C08F
C08L
B32B

The present search report has been drawn up for all claims

1

| Place of search | Date of completion of the search | Examiner |
|---|---|---|
| Munich | 27 May 2024 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 21 6942

This annex lists the patent family members relating to the patent documents cited in the above-mentioned European search report. The members are as contained in the European Patent Office EDP file on
The European Patent Office is in no way liable for these particulars which are merely given for the purpose of information.

27-05-2024

| Patent document cited in search report | Publication date | Patent family member(s) | Publication date |
|---|---|---|---|
| EP 4116359 A1 | 11-01-2023 | CN 117597383 A | 23-02-2024 |
| | | EP 4116359 A1 | 11-01-2023 |
| | | WO 2023280799 A1 | 12-01-2023 |
| EP 3009457 A1 | 20-04-2016 | CL 2017000878 A1 | 09-02-2018 |
| | | CN 107108989 A | 29-08-2017 |
| | | DK 3009457 T3 | 31-07-2017 |
| | | EP 3009457 A1 | 20-04-2016 |
| | | EP 3207066 A1 | 23-08-2017 |
| | | KR 20170067822 A | 16-06-2017 |
| | | PE 20171539 A1 | 27-10-2017 |
| | | WO 2016058967 A1 | 21-04-2016 |
| WO 2023217750 A1 | 16-11-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021009189 A
- WO 2021009190 A
- WO 2021009191 A
- WO 2021009192 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- WO 2016198273 A
- WO 9619503 A
- WO 9632420 A


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.*, 2006, vol. 207, 382
- **PARKINSON, M. ; KLIMKE, K. ; SPIESS, H.W. ; WILHELM, M.** *Macromol. Chem. Phys.*, 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules*, 2004, vol. 37, 813
- **FILIP, X. ; TRIPON, C. ; FILIP, C.** *J. Mag. Resn.*, 2005, vol. 176, 239
- **GRIFFIN, J.M. ; TRIPON, C. ; SAMOSON, A. ; FILIP, C. ; BROWN, S.P**. *Mag. Res. in Chem.*, 2007, vol. 45, S1, S198
- **CASTIGNOLLES, P. ; GRAF, R. ; PARKINSON, M. ; WILHELM, M ; GABORIEAU, M.** *Polymer*, 2009, vol. 50, 2373
- **BUSICO, V. ; CIPULLO, R.** *Prog. Polym. Sci.*, 2001, vol. 26, 443
- **BUSICO, V ; CIPULLO, R. ; MONACO, G. ; VACATELLO, M. ; SEGRE, A.L.** *Macromoleucles*, 1997, vol. 30, 6251
- **ZHOU, Z. ; KUEMMERLE, R. ; QIU, X. ; REDWINE, D ; CONG, R. ; TAHA, A. ; BAUGH, D. ; WINNIFORD, B.** *J. Mag. Reson.*, 2007, vol. 187, 225
- **BUSICO, V. ; CARBONNIERE, P ; CIPULLO, R. ; PELLECCHIA, R. ; SEVERN, J. ; TALARICO, G.** *Macromol. Rapid Commun.*, 2007, vol. 28, 1128
- **RESCONI, L. ; CAVALLO, L ; FAIT, A. ; PIEMONTESI, F.** *Chem. Rev.*, 2000, vol. 100, 1253